# EUROPEAN PATENT SPECIFICATION

(11) **EP 3 035 618 B1**
(45) Date of publication and mention of the grant of the patent: **22.08.2018**
(21) Application number: 14307088.6
(22) Date of filing: 18.12.2014
(51) Int. Cl.: H04L 12/913

(54) **Integrated bandwidth and storage reservation**
Integrierte Bandbreite und Speicherreservierung
Réservation intégrée de bande passante et de stockage

(43) Date of publication of application: 22.06.2016
(73) Proprietor: Alcatel Lucent, 91620 Nozay (FR)
(72) Inventor: Verchere, Dominique, 91620 Nozay (FR); Vigoureux, Martin, 91620 Nozay (FR)
(74) Representative: Novagraaf Technologies

(56) References cited:
- US-A1- 2004 019 686
- US-B1- 6 876 668

## Description

### FIELD OF THE INVENTION

The present invention relates to transport networks, and more particularly to transport network bandwidth and storage reservation management. More particularly, it relates to a method for managing bandwidth and managing storage resources within a single session of a resource reservation protocol being a RSVP protocol or its extensions RSVP-TE protocols in a transport network. More particularly, the method may apply to any types of RSVP-TE controlled transport networks including labeled packet switched capable networks such as MPLS (MultiProtocol Label Switching) controlled transport networks (e.g. IP/PMLS, Frame Relay, ATM) and more generally to any labeled resource switched capable networks such as GMPLS (Generalized Multiprotocol Label Switching) controlled transport networks (e.g. Ethernet, SONET/SDH, wavelength, waveband, fiber, physical ports). Also, the invention relates to a network node in a transport network and a non-transitory machine-readable storage medium. An example of the prior art can be found in US6876668.

### BACKGROUND OF THE INVENTION

In a transport network, packets of data are sent in a series of hops from one network node to the next network node, between a sender of the data and a receiver of data. Network nodes, i.e. routers and switches, include of necessity buffer memories, and generally storage resources at least in the form of cache memory for temporarily storing replicas of websites close to users thereof. The term "resources", in the context of a transport network, generally refers to packet handling capabilities achieved through a combination of link bandwidth and buffer memory in a node. To avoid confusion, we shall call this combination of link bandwidth and buffering capabilities "bandwidth", as the terms "resources" and "bandwidth" in the context of a transport network, are usually considered as being synonymous. Resources will generally refer to storage resources.

Currently, storage at network nodes essentially provides network caching and replication consisting in storing multiple copies of data objects in distributed locations throughout the network. With Web caching, consumers retrieve the nearest copy of a data object, be it from cache or the original source. Caching is often implemented by a network service provider (ISP) purely as a means to reduce communications link costs. Replication resources are, on the other hand, typically purchased by the publisher of Web pages as a way of meeting latency or availability goals. Data objects are cached only for a limited duration. Replication is slightly more permanent, possibly for a contracted duration, and corresponds to the type of storage we are concerned with here.

Network nodes (i.e. routers and switches) have the capability to include considerable storage capacity, not only for Web site caching and replication, but available as pure storage capacity for storing very considerable quantities of data, of a variety of data types ranging from entertainment to databases to computer programs. Today, such storage is unrelated to the transport or routing functions of the node, but the available memory resources may participate in both.

The continuing growth of broadband technology and the corresponding need for more and more storage volume has to a large degree been driven by the hunger of customers for new multimedia services as well as Web content. In particular, the use of audio and video streaming formats has become common for delivery of rich media to the public, both residential and business customers.

If content can be moved closer to where it is consumed, this results in greater network efficiency, improved QoS (Quality of Service), and lower latency. To meet this challenge, simply installing more and more Web cache can never suffice, while in the case of replication, this is usually performed simply on an ad hoc basis, with static replicas being unable to keep pace with changing traffic patterns and network conditions. Moving content closer to the consumer is consequently a major concern which current solutions do not address adequately. This need will be considerably exacerbated by the generalization of the Internet of Things (IoT), one of the features of which is to allow consumers to interact with a multitude of connected objects anywhere in the world, generally from a mobile device. The advertisement of the existence of such facilities will necessitate the creation of massive databases providing descriptions of such facilities, and it should ideally be possible to move content of such database descriptions close to people who are likely to use them.

To satisfy rapidly changing needs for storage for applications which users are calling for, massive storage capabilities, easily allocated and deallocated corresponding to changing consumer needs and preferences - which, which may differ from one location to another - are essential.

Network nodes, i.e. switches and routers, are ideal to fulfill this function. Bandwidth management is now a relatively mature technology which can be implemented from a node in the network, but satisfactory solutions allowing bandwidth management along with storage capacity management is a still unfulfilled need - a challenge vendors are now facing is to provide solutions enabling full use to be made of such storage capabilities for storing applications and these storage capabilities to be managed (e.g., allocated/reserved, freed, modified) in a dynamic manner as needs evolve and change.

One solution to the problem of simultaneously managing bandwidth and storage resources could consist in using networked management systems once they have been augmented in order to be able to manage storage resources, implemented at Management Plane level. This approach is however completely unsuited to the dynamics of resource usage in transport networks. Additionally, such systems rely on knowledge of the equipment which is deployed in the network, and thus not would be able to take into account information concerning storage, which had been entered by the network operator. A solution consisting in running such software each time availability of storage resources changes would not be practical.

### SUMMARY OF THE INVENTION

The aim of the invention is to manage, within a single session, both bandwidth and storage resources, allowing storage resources at network nodes to be adapted to needs (i.e. reserved, allocated, freed, re-assigned and so on) from a node in the network in the same way as bandwidth is currently managed - although it should be borne in mind that bandwidth management concerns a path generally including a number of nodes (routers) while storage management as considered herein only involves the node at which it is desired to manage storage volume. The invention deals more specifically with the allocation/freeing/modification of a given volume of storage at a given point in the network while at the same time reserving/freeing bandwidth on the path to that storage point. A further aim of the invention is to provide solutions enabling such storage resources to be managed dynamically.

The invention applies to nodes (routers and switches) of a transport network which in addition to their routing and transport function, are hosting storage resources. It relies on an extension of an existing resource reservation protocol, particularly the RSVP-TE protocols - which usually targets bandwidth (as defined herein) management. According to the invention, specific information relating to storage management is encoded in messages exchanged by the RSVP-TE protocol allowing storage space at a specific point to be allocated, reserved, modified and freed at this point during a same RSVP-TE session which is reserving, allocating, modifying and freeing bandwidth on the path up to the particular storage point. The basic idea consists in extending the Resource reSerVation Protocol with Traffic Engineering extensions (RSVP-TE) by encoding specific information in the messages exchanged by that protocol such that storage space volume can be reserved, modified and freed at a targeted point, as part of the same session reserving, modifying and freeing bandwidth on the path to the storage point.

More particularly, the invention provides a method for managing bandwidth and managing storage resources within a single session of a resource reservation protocol being a RSVP-TE (Resource Reservation) protocol in a transport network having nodes that include data memory means that may be assigned to temporarily caching data at said node or to longer term storage allowing applications and data to be stored therein comprising a step of allocating a determined volume of said memory means to storage resources in which applications and data may be stored, comprising:
at a first node of said network, receiving a request to allocate a defined storage volume at a specified second node of said network, and a request to provide a specified bandwidth from said first node up to said specified second node where said storage resources are to be defined,
encoding said request to provide the specified bandwidth as information in a resource reservation protocol message and inserting said request to allocate a defined storage volume at said specified second node of said network as a STORAGE_REQUEST object in said resource reservation protocol message,
transmitting said message through said network along a path to said specified second node, reserving said specified bandwidth at each intermediate node of said network,
at said specified second node, receiving said resource reservation protocol message, and parsing its content in order to request reservation of said specified bandwidth at said specified second node of said network and determining whether said bandwidth allocation request can be satisfied, and parsing the content of said STORAGE_REQUEST storage volume request object contained in said resource reservation protocol message,
in a storage management unit of said specified second node determining whether said STORAGE_REQUEST storage allocation request can be satisfied,
if said bandwidth allocation request and said storage allocation request can be satisfied at said specified second node, the step of sending a STORAGE_SPACE successfully reserved storage space identifier in the form of an object constituting a part of a message of said resource reservation protocol back from said specified second node to said first node, along the path that was followed by the resource reservation protocol message through said network from said first node to said specified second node.

The invention also provides network nodes in a transport network, one for receiving a request to reserve/modify/free bandwidth and to allocate/ reserve/modify/free a defined storage volume at a specified second node of the network and allocating/ reserving/modifying/freeing bandwidth and a defined storage volume, and the said specified second node where the storage volume is allocated/ reserved/modified/freed.

According to another aspect, the invention also provides a non-transitory machine-readable storage medium having machine-readable instructions for causing a processor to perform at least a part of the method above-mentioned.

### BRIEF DESCRIPTION OF THE DRAWINGS

Figure 1 is an example of successful storage reservation session.
Figure 2 is an example of storage reservation teardown initiated by the sender.

### DETAILED DESCRIPTION OF A PREFERRED EMBODIMENT

The dynamic nature of the Internet and the diversity of its components means that there is no guarantee that any particular path will possess the bandwidth, or be suitable for, transmitting data at the transmission throughput (i.e. bandwidth) requested, even if the path is available and reliable. RSVP-TE (Resource Reservation Protocol) is a well-known protocol for reserving bandwidth required by any application in transport networks. It does this by reserving resources (i.e. what we have defined as bandwidth) across a network.

The invention defines new objects in RSVP-TE protocol. Before discussing the new RSVP objects, we shall discuss the RSVP-TE protocol in general. An RSVP-TE message is placed in the information field of a transport datagram. The RSVP-TE protocol allows applications to reserve bandwidth for their data flows. It is used by a host on behalf of an application data flow to request a specific amount of bandwidth from the network. RSVP is also used by routers to forward bandwidth reservation requests. To perform network resource reservation with RSVP-TE protocol, an RSVP-TE engine must be implemented in the controller of each node involved, i.e. in receivers, senders, and intermediate nodes.

The RSVP-TE protocol carries the bandwidth request through the transport network visiting each node controller of the network used to carry the application data flow. From now, RSVP and RSVP-TE are used indifferently for RSVP-TE protocol: Resource reSerVation Protocol with Traffic Engineering extensions. At each node RSVP will attempt to make a bandwidth reservation for the flow. More particularly, in order to make a bandwidth reservation at a node, two local decision modules; admission control and policy control, are used.

Whenever a node (router) receives a new reservation message, it must first determine if its downstream links on the multicast tree can accommodate the reservation. This admission test is performed whenever a router receives a reservation message. If the admission test fails, the router rejects the reservation and returns a reservation request failed message.

Admission control will determine whether the node has sufficient available resources (i.e. bandwidth) to supply the requested QoS. Policy control will determine whether the user has administrative permission to make the reservation. If the node is able to satisfy the bandwidth request, the node effectively reserves the appropriate amount of bandwidth for the flow. According to an embodiment, if either of the above checks fails, the RSVP protocol will send an error notification to the application process that originated the request in the form of an RSVP reservation error (RESVERR) message. According to another embodiment, if both checks have succeeded, parameters in a packet classifier and a packet scheduler are adjusted to obtain the desired QoS. Two fundamental RSVP message types are path request messages, PATH, which originate at the sender and flow downstream towards receivers, and RESV reservation accept messages which flow from the receiver of the flow and follow exactly the reverse of the path that the data packets will use and create and maintain a "reservation state" in each node along the path. RESV messages are finally delivered to the sender of the application data flow itself so that it can set up appropriate traffic control parameters for the first hop. Refreshment messages comprising PATH path request messages and RESV reservation accept messages are transmitted periodically from end to end. Each reservation for bandwidth stored in a router has an associated timer. If a reservation's timer expires, then the network resource reservation session become staled and according to the policy control function, the reservation may be removed. If a receiver desires to maintain a reservation, it must periodically refresh the reservation by sending reservation messages. A receiver can also change its reservation (e.g., the amount of bandwidth or the senders it wants to receive from) by adjusting its reservation in its stream of refresh messages.

According to an embodiment, within the RSVP protocol, the invention provides the definition of a new optional object (STORAGE_REQUEST) containing the volume of storage which it is requested to be reserved at the end-point of the RSVP session. The requested storage volume is expressed in octets. It has the following format:

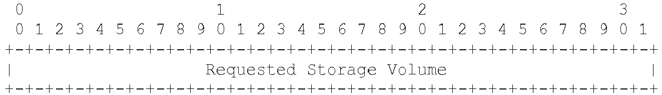

This STORAGE_REQUEST object can be defined to also include specific information qualifying the reservation such as the desired persistence of the information to be stored, the desired file system type and other appropriate parameters.

According to an embodiment, within the RSVP protocol, the invention also provides the definition of a new optional object (STORAGE_SPACE) containing a unique identifier (at least within the bounds of the RSVP session) identifying the storage space successfully reserved. This identifier may be a pointer to the first memory block of the reserved space. The object has the following format:

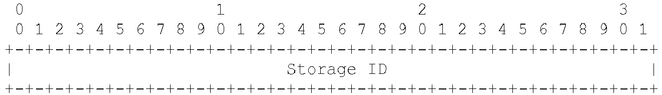

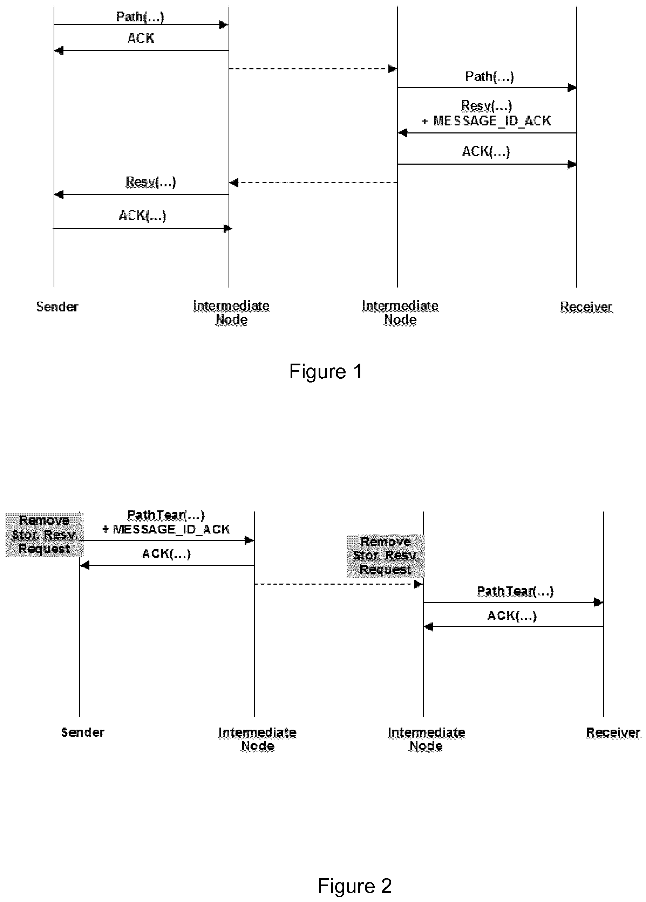

Within the RSVP protocol, the invention can also provide the definition of new error codes to notify appropriate nodes of errors relative to the reservation of the storage space. The newly defined error codes in PathErr message should provide information why the storage volume reservation has failed, e.g., as a result of insufficient resources) at the targeted end point. Figure 1 is an example of successful storage reservation session and Figure 2 is an example of storage reservation teardown initiated by the sender.

The volume of storage which it is requested to be reserved at the end-point of the RSVP session and the storage space successfully reserved are encoded in the new objects. These new objects are inserted into the appropriate RSVP messages, the STORAGE_REQUEST object in the PATH message for requesting storage volume, and the STORAGE_SPACE object in the RESV message for accepting the reservation of the storage volume identified by Storage_ID, and in the PathTear and ResvTear messages for de-allocating/freeing the reserved space.

The storage resource is explicitly reserved as long as PathTear (or ResvTear) messages are not sent from the sender node to the receiver node (from the receiver node to the sender node) to tear-down the corresponding RSVP-TE session. Other options based on PathErr messages with or without Path_State_Removed flag can also be used. The RSVP-TE signalling session will usually last for duration of time that has been paid for. During this period, arrangements can be made for delivering back from the second node to the first node information concerning accesses made to and use made of said reserved storage volume.

## Claims

1. A method for managing bandwidth and managing storage resources within a single session of a resource reservation protocol being a RSVP, Resource Reservation Protocol, protocol in a transport network having nodes that include a processor and data memory means that may be assigned to temporarily caching data at said node or to longer term storage allowing applications and data to be stored therein comprising a step of allocating a determined volume of said memory means to storage resources in which applications and data may be stored, comprising:
at a first node of said network,
receiving a request to allocate a defined storage volume at a second node of said network, and a request to provide a specified bandwidth from said first node up to said second node where said storage resources are to be defined,
encoding said request to provide the specified bandwidth as information in a resource reservation protocol message and inserting said request to allocate a defined storage volume at said second node of said network as a STORAGE_REQUEST object in said resource reservation protocol message,
transmitting said message through said network along a path to said second node, reserving said specified bandwidth at each intermediate node of said network,
at said second node,
receiving said resource reservation protocol message, and parsing its content in order to request reservation of said specified bandwidth at said second node of said network and determining whether said bandwidth allocation request can be satisfied, and parsing the content of said STORAGE REQUEST object contained in said resource reservation protocol message,
in a storage management unit of said second node, determining whether said storage allocation request in said STORAGE_REQUEST object can be satisfied,
if said bandwidth allocation request and said storage allocation request can be satisfied at said second node, the step of sending a successfully reserved storage space identifier in the form of a STORAGE_SPACE object constituting a part of a message of said resource reservation protocol back from said second node to said first node, along the path that was followed by the resource reservation protocol message through said network from said first node to said second node.

2. The method according to claim 1 wherein the said messages are RSVP protocol messages and the said STORAGE_REQUEST object requesting allocation of a defined storage volume has the format 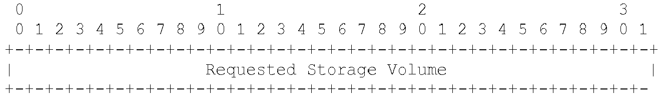 and the said STORAGE_SPACE storage space successfully reserved object has the format:

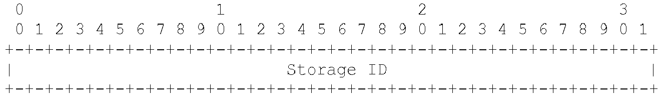

3. The method according to claim 1 or 2, the method comprising, if said bandwidth allocation request and said storage allocation request can be satisfied, sending a reserved storage space identifier as part of said resource reservation protocol back to said first node, along the path that was followed by the resource reservation protocol message through said network from said first node to said second node.

4. The method according to any one of claims 1 or 2, the method comprising, if said bandwidth allocation request cannot be satisfied at said second node, the step of sending an error message as part of said resource reservation protocol back to said first node, not reserving bandwidth at said intermediate nodes and not reserving storage space at said second node.

5. The method according to any one of claims 1 or 2, the method comprising, if said bandwidth allocation request can be satisfied at said second node but said request for allocating storage resources cannot be satisfied, the step of sending an error message as part of said protocol reservation protocol back to said first node and not reserving bandwidth at said intermediate nodes and not reserving storage space at said second node.

6. The method according to any one of the preceding claims, wherein said request to allocate a defined storage volume at a specified node of said network encoded as an object in said RSVP resource reservation protocol message includes a specification of the persistence for which allocation is requested.

7. The method according to any one of the preceding claims, wherein said request to allocate a defined storage volume at a specified node of said network encoded as an object in said RSVP resource reservation protocol message includes a specification of the file type for which storage space is requested.

8. The method according to any one of claims 1 to 3, wherein said STORAGE_SPACE successfully reserved storage space identifier includes a pointer to the first memory block of the reserved storage space.

9. The method according to any one of claims 1 to 3 and 8, including subsequently delivering back from said second node to said first node information concerning accesses made to and use made of said reserved storage space.

10. The method according to claim 1 comprising employing the mechanism as defined in claim 1 to de-allocate or modify instead of allocate a reserved bandwidth and a reserved storage space within a single session of the RSVP resource reservation protocol.

11. The method according to any one of the preceding claims, wherein said transport network operates using RSVP-TE for MPLS and GMPLS.

12. A network node in a transport network, including data memory means that may be assigned to temporarily caching data at said node or to longer term storage allowing applications and data to be stored therein, and to be used for managing bandwidth and managing storage resources within a single session of a resource reservation protocol being a RSVP (Resource reservation Protocol) protocol, said node comprising a processor and means for receiving a request to allocate a defined storage volume at a specified second node of said network and a request to provide a specified bandwidth from said network node up to said specified second node where said storage resources are to be reserved; means for encoding said request to provide the specified bandwidth as information in an RSVP resource reservation protocol message,
means for inserting said request to allocate a defined storage volume at said specified second node of said network as an object in said RSVP resource reservation protocol message,
and means for sending said message, for transmission through said network along a path to said specified second node and reservation of said specified bandwidth at each intermediate node of said network.

13. A network node in a transport network, including data memory means that may be assigned to temporarily caching data at said node or to longer term storage allowing applications and data to be stored therein, and to be used for managing bandwidth and managing storage resources within a single session of a resource reservation protocol being a RSVP (Resource reservation Protocol) protocol, said node comprising: a processor and means for receiving an RSVP resource reservation protocol message sent from a first node, and parsing its content in order to request allocation of specified bandwidth at said network node and for parsing the content of a STORAGE_REQUEST storage volume request object in said RSVP resource reservation protocol message; means for determining whether the bandwidth allocation request can be satisfied; a storage management unit including means for determining whether said STORAGE_REQUEST storage allocation request can be satisfied, and for sending a successfully reserved storage space identifier in the form of a STORAGE_SPACE object constituting a part of said protocol reservation protocol, if both of said request for allocation of specified bandwidth and storage allocation request can be satisfied at said network node, back from said network node to said first node along the path that was followed by the resource reservation protocol message through said network from said first node to said network node.

14. The network node according to claim 12 wherein the said messages are RSVP protocol messages and the said STORAGE_REQUEST object requesting allocation of a defined storage volume has the format:

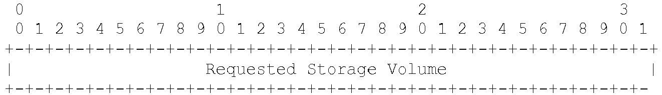

15. The network node according to claim 13 wherein the said messages are RSVP protocol messages and the said STORAGE_REQUEST object requesting allocation of a defined storage volume has the format 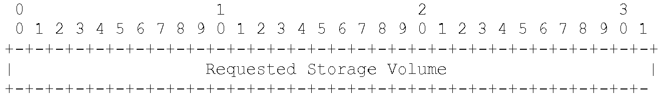 and the said STORAGE_SPACE storage space successfully reserved object has the format:

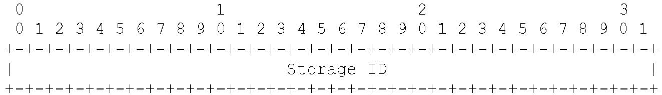

16. The network node according to claim 14 or 15 wherein the request to allocate a defined storage volume at the specified node of the network encoded as an object in said RSVP resource reservation protocol message includes a specification of the duration or persistence for which allocation is requested.

17. The network node according to claim 14 or 15 wherein the request to allocate a defined storage volume at the specified node of said network encoded as an object in said RSVP resource reservation protocol message includes a specification of the file type for which storage space is requested.

18. The network node according to claim 15 wherein said STORAGE_SPACE successfully reserved storage space identifier includes a pointer to the first memory block of the reserved storage space.

19. The network node according to claim 15 including means for subsequently delivering back from said network node to said first node information concerning accesses made to and use made of said reserved storage space.

20. A non-transitory machine-readable storage medium having machine-readable instructions that when executed by a computer perform the method according to one of claims 1 to 11.

## Patentansprüche

1. Verfahren zum Verwalten von Bandbreite und zum Verwalten von Speicherressourcen innerhalb einer einzelnen Sitzung eines Ressourcenreservierungsprotokolls, bei dem es sich um ein RSVP-Protokoll (Resource Reservation Protocol) in einem Transportnetzwerk handelt, das Knoten aufweist, die einen Prozessor und Datenspeichermittel einschließen, die zu temporären Cache-Daten an besagtem Knoten oder Anwendungen zugewiesen werden können, oder für eine längerfristige Speicherung von Anwendungen und Daten darin, umfassend einen Schritt der Zuweisung eines bestimmten Volumens von besagtem Speichermittel zum Speichern von Ressourcen, in denen Anwendungen und Daten gespeichert werden können, umfassend:
an einem ersten Knoten besagten Netzwerks,
Empfangen einer Anforderung zum Zuweisen eines definierten Speichervolumens an einem zweiten Knoten besagten Netzwerks, und einer Anforderung zum Bereitstellen einer spezifizierten Bandbreite von besagtem ersten Knoten bis zu besagtem zweiten Knoten, wo die Ressourcen definiert werden müssen,
Kodieren besagter Anforderung zum Bereitstellen der spezifizierten Bandbreite als Information in einer Ressourcenreservierungsprotokollnachricht und Einfügen besagter Anforderung zum Zuweisen eines definierten Speichervolumens an besagtem zweiten Knoten besagten Netzwerks als ein Objekt SPEICHER_ANFORDERUNG in besagter Ressourcenreservierungsprotokollnachricht,
Übertragen besagter Nachricht durch besagtes Netzwerk entlang eines Pfades zu besagtem zweiten Knoten, Reservieren besagter spezifizierten Bandbreite an jedem mittleren Knoten von besagtem Netzwerk,
an besagtem zweiten Knoten,
Empfangen besagter Ressourcenreservierungsprotokollnachricht, und Parsen ihres Inhalts, um eine Reservierung besagter spezifizierten Bandbreite an besagtem zweiten Knoten besagten Netzwerks anzufordern, und Bestimmen, ob besagte Bandbreitenzuweisungsanforderung erfüllt werden kann, und Parsen des Inhalts besagten Objekts SPEICHER_ANFORDERUNG, das in besagter Ressourcenreservierungsprotokollnachricht enthalten ist,
in einer Speicherverwaltungseinheit besagten zweiten Knotens, Bestimmen, ob besagte Speicherzuweisungsanforderung in besagtem Objekt SPEICHER_ANFORDERUNG erfüllt werden kann,
wenn besagte Bandbreitenzuweisungsanforderung und besagte Speicherzuweisungsanforderung erfüllt werden können an besagtem zweiten Knoten, Schritt des Sendens einer Kennung für einen erfolgreich reservierten Speicherplatz in Form eines Objekts SPEICHER_PLATZ, das einen Teil einer Nachricht besagten Ressourcenreservierungsprotokolls darstellt, zurück von dem zweiten Knoten zu besagtem ersten Knoten, entlang des Pfades, dem die Ressourcenreservierungsprotokollnachricht folgte durch besagtes Netzwerk von besagtem ersten Knoten zu besagtem zweiten Knoten.

2. Verfahren nach Anspruch 1, wobei besagte Nachrichten RSVP-Protokollnachrichten sind und besagtes Objekt SPEICHER_ANFORDERUNG, das die Zuweisung eines definierten Speichervolumens anfordert, das folgende Format aufweist 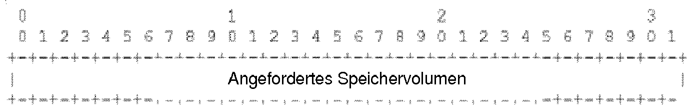 und besagtes Objekt SPEICHER_PLATZ für erfolgreich reservierten Speicherplatz das folgende Format aufweist:

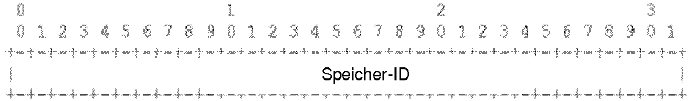

3. Verfahren nach Anspruch 1 oder 2, wobei das Verfahren umfasst, wenn besagte Bandbreitenzuweisungsanforderung und besagte Speicherzuweisungsanforderung erfüllt werden können, Senden einer Kennung für reservierten Speicherplatz als Teil besagten Ressourcenreservierungsprotokolls zurück an besagten ersten Knoten, entlang des Pfades, dem gefolgt wurde von der Ressourcenreservierungsprotokollnachricht durch besagtes Netzwerk von besagtem ersten Knoten zu besagtem zweiten Knoten.

4. Verfahren nach einem beliebigen der Ansprüche 1 oder 2, wobei das Verfahren umfasst, wenn besagte Bandbreitenzuweisungsanforderung nicht erfüllt werden kann an besagtem zweitem Knoten, den Schritt des Sendens einer Fehlernachricht als Teil besagten Ressourcenreservierungsprotokolls zurück an besagten ersten Knoten, ohne Reservierung der Bandbreite an besagten mittleren Knoten und ohne Reservierung von Speicherplatz an besagtem zweiten Knoten.

5. Verfahren nach einem beliebigen der Ansprüche 1 oder 2, wobei das Verfahren umfasst, wenn besagte Bandbreitenzuweisungsanforderung erfüllt werden kann an besagtem zweiten Knoten, aber besagte Anforderung zum Zuweisen von Speicherressourcen nicht erfüllt werden kann, Schritt des Sendens einer Fehlernachricht als Teil besagten Protokollreservierungsprotokolls zurück an besagten ersten Knoten und ohne Reservierung der Bandbreite an besagten mittleren Knoten und ohne Reservierung von Speicherplatz an besagtem zweiten Knoten.

6. Verfahren nach einem beliebigen der vorhergehenden Ansprüche, wobei besagte Anforderung zum Zuweisen eines definierten Speichervolumens an einem spezifizierten Knoten besagten Netzwerks, kodiert als ein Objekt in besagter RSVP Ressourcenreservierungsprotokollnachricht, eine Spezifikation der Persistenz einschließt, für welche die Zuweisung angefordert wird.

7. Verfahren nach einem beliebigen der vorhergehenden Ansprüche, wobei besagte Anforderung zum Zuweisen eines definierten Speichervolumens an einem spezifizierten Knoten besagten Netzwerks, kodiert als ein Objekt in besagter RSVP Ressourcenreservierungsprotokollnachricht, eine Spezifikation des Dateityps einschließt, für welche Speicherplatz angefordert wird.

8. Verfahren nach einem beliebigen der Ansprüche 1 bis 3, wobei besagte SPEICHER_PLATZ Kennung für erfolgreich reservierten Speicherplatz einen Pointer einschließt auf den ersten Speicherblock des reservierten Speicherplatzes.

9. Verfahren nach einem beliebigen der Ansprüche 1 bis 3 und 8, einschließend die nachfolgende Lieferung zurück von besagtem zweiten Knoten zu besagtem ersten Knoten von Information, betreffend durchgeführt Zugriffe und den Gebrauch besagten reservierten Speicherplatzes.

10. Verfahren nach Anspruch 1, umfassend das Einsetzen des Mechanismus wie in Anspruch 1 definiert zum Aufheben der Zuweisung oder zum Modifizieren anstelle des Zuweisens einer reservierten Bandbreite und eines reservierten Speicherplatzes innerhalb einer einzelnen Sitzung des RSVP-Ressourcenreservierungsprotokolls.

11. Verfahren nach einem beliebigen der vorhergehenden Ansprüche, wobei besagtes Transportnetzwerk betrieben wird unter Verwenden von RSVP-TE für MPLS und GMPLS.

12. Netzwerkknoten in einem Transportnetzwerk, einschließend Datenspeichermittel, die zu temporären Cache-Daten an besagtem Knoten oder Anwendungen zugewiesen werden können, die eine längerfristige Speicherung erlauben, und zu Daten, die darin gespeichert werden können, die verwendet werden können für das Verwalten von Bandbreite und das Verwalten von Speicherressourcen innerhalb einer einzelnen Sitzung eines Ressourcenreservierungsprotokolls, das ein RSVP-Protokoll (Resource reservation Protocol) ist, wobei besagter Knoten einen Prozessor und Mittel zum Empfangen einer Anforderung zum Zuweisen eines definierten Speichervolumens an einem spezifizierten zweiten Knoten besagten Netzwerks umfasst und eine Anforderung zum Bereitstellen einer spezifizierten Bandbreite von besagtem Netzwerkknoten bis zu besagtem spezifizierten zweiten Knoten, wo besagte Speicherressourcen reserviert werden müssen;
Mittel zum Kodieren besagter Anforderung zum Bereitstellen der spezifizierten Bandbreite als Information in einer RSVP Ressourcenreservierungsprotokollnachricht,
Mittel zum Einfügen besagter Anforderung zum Zuweisen eines definierten Speichervolumens an besagtem spezifizierten zweiten Knoten besagten Netzwerks als ein Objekt in besagter RSVP Ressourcenreservierungsprotokollnachricht,
und Mittel zum Senden besagter Nachricht, für die Übertragung durch besagtes Netzwerk entlang eines Pfades zu besagtem spezifizierten zweiten Knoten und Reservierung besagter spezifizierter Bandbreite an jedem mittleren Knoten besagten Netzwerks.

13. Netzwerknoten in einem Transportnetzwerk, einschließend Datenspeichermittel, die zu temporären Cache-Daten an besagtem Knoten oder Anwendungen zugewiesen werden können, die eine längerfristige Speicherung erlauben, und zu Daten, die darin gespeichert werden können, die verwendet werden können für das Verwalten von Bandbreite und das Verwalten von Speicherressourcen innerhalb einer einzelnen Sitzung eines Ressourcenreservierungsprotokolls, das ein RSVP-Protokoll (Resource Reservation Protocol) ist, wobei besagter Knoten umfasst: einen Prozessor und Mittel zum Empfangen einer RSVP Ressourcenreservierungsprotokollnachricht, die von einem ersten Knoten gesendet wurde, und Parsen ihres Inhalts, um eine Zuweisung einer spezifizierten Bandbreite an besagtem Netzwerkknoten anzufordern, und zum Parsen des Inhalts eines Speichervolumenanforderungsobjekts SPEICHER_ANFORDERUNG in besagter RSVP Ressourcenreservierungsprotokollnachricht; Mittel zum Bestimmen, ob die Bandbreitenzuweisungsanforderung erfüllt werden kann; eine Speicherverwaltungseinheit, einschließend Mittel zum Bestimmen, ob besagte Speicherzuweisungsanforderung SPEICHER_ANFORDERUNG erfüllt werden kann, und zum Senden einer Kennung für die erfolgreiche Reservierung von Speicherplatz in Form eines Objekts SPEICHER_PLATZ, das Teil besagten Protokollreservierungsprotokolls ist, wenn sowohl besagte Anforderung für die Zuweisung von spezifizierter Bandbreite und die Anforderung für die Speicherzuweisung an besagtem Netzwerkknoten erfüllt werden können, zurück von besagtem Netzwerkknoten zu besagtem ersten Knoten entlang des Pfades, dem die Ressourcenreservierungsprotokollnachricht folgte durch besagtes Netzwerk von besagtem ersten Knoten zu besagtem Netzwerkknoten.

14. Netzwerkknoten nach Anspruch 12, wobei besagte Nachrichten RSVP-Protokollnachrichten sind und besagtes Objekt SPEICHER_ANFORDERUNG, das die Zuweisung eines definierten Speichervolumens anfordert, das folgende Format aufweist:

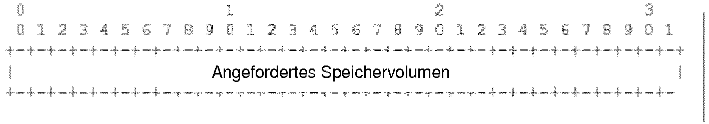

15. Netzwerkknoten nach Anspruch 13, wobei besagte Nachrichten RSVP-Protokollnachrichten sind und besagtes Objekt SPEICHER_ANFORDERUNG, das die Zuweisung eines definierten Speichervolumens anfordert, das folgende Format aufweist 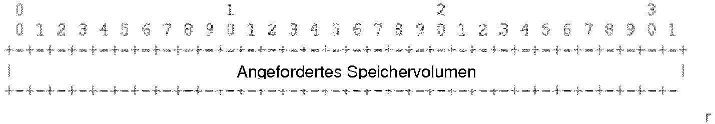 und besagtes Objekt SPEICHER_PLATZ für erfolgreich reservierten Speicherplatz das folgende Format aufweist:

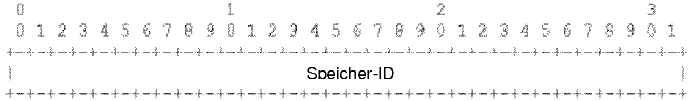

16. Netzwerkknoten nach Anspruch 14 oder 15, wobei die Anforderung zum Zuweisen eines definierten Speichervolumens an dem spezifizierten Knoten des Netzwerks, kodiert als ein Objekt in besagter RSVP Ressourcenreservierungsprotokollnachricht, eine Spezifikation der Dauer oder Persistenz einschließt, für welche die Zuweisung angefordert wird.

17. Netzwerkknoten nach Anspruch 14 oder 15, wobei besagte Anforderung zum Zuweisen eines definierten Speichervolumens an dem spezifizierten Knoten besagten Netzwerks, kodiert als ein Objekt in besagter RSVP Ressourcenreservierungsprotokollnachricht, eine Spezifikation des Dateityps einschließt, für welche Speicherplatz angefordert wird.

18. Netzwerkknoten nach Anspruch 15, wobei besagte SPEICHER_PLATZ Kennung für erfolgreich reservierten Speicherplatz einen Pointer einschließt auf den ersten Speicherblock des reservierten Speicherplatzes.

19. Netzwerkknoten nach Anspruch 15, einschließend Mittel für die anschließende Lieferung zurück von besagtem Netzwerkknoten zu besagtem ersten Knoten von Information, betreffend durchgeführte Zugriffe und den Gebrauch besagten reservierten Speicherplatzes.

20. Nicht transitorisches maschinenlesbares Speichermedium, das maschinenlesbare Befehle aufweist, die, wenn sie auf einem Computer ausgeführt werden, das Verfahren nach einem der Ansprüche 1 bis 11 durchführen.

## Revendications

1. Procédé destiné à gérer une bande passante et à gérer des ressources de stockage à l'intérieur d'une unique session d'un protocole de réservation de ressources étant un protocole RSVP, protocole de réservation de ressources, dans un réseau de transport présentant des noeuds qui incluent un processeur et un moyen de mémoire de données qui peut être affecté à une mise en cache temporaire de données au niveau dudit noeud ou à un stockage à plus long terme permettant à des applications et à des données d'être stockées dessus comprenant une étape d'attribution d'un volume déterminé dudit moyen de mémoire à des ressources de stockage dans lesquelles des applications et des données peuvent être stockées, comprenant :
au niveau d'un premier noeud dudit réseau,
une réception d'une demande d'attribution d'un volume de stockage défini au niveau d'un second noeud dudit réseau, et une demande de fourniture d'une bande passante spécifiée à partir dudit premier noeud jusqu'audit second noeud où lesdites ressources de stockage sont destinées à être définies,
un codage de ladite demande de fourniture de la bande passante spécifiée à titre d'information dans un message de protocole de réservation de ressources et une insertion de ladite demande d'attribution d'un volume de stockage défini au niveau dudit second noeud dudit réseau à titre d'objet STORAGE_REQUEST dans ledit message de protocole de réservation de ressources,
une transmission dudit message à travers ledit réseau le long d'un trajet vers ledit second noeud, une réservation de ladite bande passante spécifiée au niveau de chaque noeud intermédiaire dudit réseau,
au niveau dudit second noeud,
une réception dudit message de protocole de réservation de ressources, et une analyse de son contenu afin de demander une réservation de ladite bande passante spécifiée au niveau dudit second noeud dudit réseau et une détermination du fait que ladite demande d'attribution de bande passante peut être satisfaite, et une analyse du contenu dudit objet STORAGE_REQUEST contenu dans ledit message de protocole de réservation de ressources,
dans une unité de gestion de stockage dudit second noeud, une détermination du fait que ladite demande d'attribution de stockage dans ledit objet STORAGE_REQUEST peut être satisfaite,
si ladite demande d'attribution de bande passante et ladite demande d'attribution de stockage peuvent être satisfaites au niveau dudit second noeud, l'étape d'envoi d'un identifiant d'espace de stockage réservé avec succès sous la forme d'un objet STORAGE_SPACE constituant une partie d'un message dudit protocole de réservation de ressources en retour dudit second noeud vers ledit premier noeud, le long du trajet qui a été suivi par le message de protocole de réservation de ressources à travers ledit réseau à partir dudit premier noeud vers ledit second noeud.

2. Procédé selon la revendication 1 dans lequel lesdits messages sont des messages de protocole RSVP et ledit objet STORAGE_REQUEST demandant une attribution d'un volume de stockage défini a le format 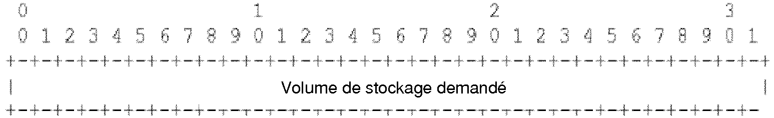 et ledit objet d'espace de stockage STORAGE_SPACE réservé avec succès a le format :

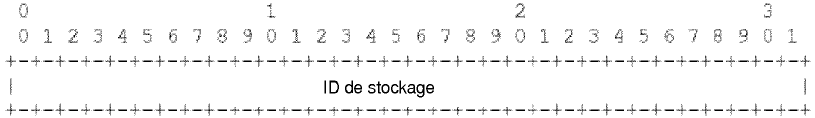

3. Procédé selon la revendication 1 ou 2, le procédé comprenant,
si ladite demande d'attribution de bande passante et ladite demande d'attribution de stockage peuvent être satisfaites, un envoi d'un identifiant d'espace de stockage réservé à titre de partie dudit protocole de réservation de ressources en retour vers ledit premier noeud, le long du trajet qui a été suivi par le message de protocole de réservation de ressources à travers ledit réseau à partir dudit premier noeud vers ledit second noeud.

4. Procédé selon l'une quelconque des revendications 1 ou 2, le procédé comprenant, si ladite demande d'attribution de bande passante ne peut être satisfaite au niveau dudit second noeud, l'étape d'envoi d'un message d'erreur à titre de partie dudit protocole de réservation de ressources en retour vers ledit premier noeud, ne réservant pas de bande passante au niveau desdits noeuds intermédiaires et ne réservant pas d'espace de stockage au niveau dudit second noeud.

5. Procédé selon l'une quelconque des revendications 1 ou 2, le procédé comprenant, si ladite demande d'attribution de bande passante peut être satisfaite au niveau dudit second noeud mais ladite demande d'attribution de ressources de stockage ne peut être satisfaite, l'étape d'envoi d'un message d'erreur à titre de partie dudit protocole de réservation de protocole en retour vers ledit premier noeud et ne réservant pas de bande passante au niveau desdits noeuds intermédiaires et ne réservant pas d'espace de stockage au niveau dudit second noeud.

6. Procédé selon l'une quelconque des revendications précédentes, dans lequel ladite demande d'attribution d'un volume de stockage défini au niveau d'un noeud spécifié dudit réseau codée à titre d'objet dans ledit message de protocole de réservation de ressources RSVP inclut une spécification de la longévité pour laquelle une attribution est demandée.

7. Procédé selon l'une quelconque des revendications précédentes, dans lequel ladite demande d'attribution d'un volume de stockage défini au niveau d'un noeud spécifié dudit réseau codée à titre d'objet dans ledit message de protocole de réservation de ressources RSVP inclut une spécification du type de fichier pour lequel un espace de stockage est demandé.

8. Procédé selon l'une quelconque des revendications 1 à 3, dans lequel ledit identifiant d'espace de stockage réservé avec succès STORAGE_SPACE inclut un pointeur vers le premier bloc mémoire de l'espace de stockage réservé.

9. Procédé selon l'une quelconque des revendications 1 à 3 et 8, incluant une délivrance subséquente en retour dudit second noeud vers ledit premier noeud d'informations concernant des accès à et une utilisation faite dudit espace de stockage réservé.

10. Procédé selon la revendication 1 comprenant un emploi du mécanisme défini dans la revendication 1 pour désattribuer ou modifier au lieu d'attribuer une bande passante réservée et un espace de stockage réservé à l'intérieur d'une unique session du protocole de réservation de ressources RSVP.

11. Procédé selon l'une quelconque des revendications précédentes, dans lequel ledit réseau de transport fonctionne en utilisant RSVP-TE pour une MPLS et une GMPLS.

12. Noeud de réseau dans un réseau de transport, incluant un moyen de mémoire de données qui peut être affecté à une mise en cache temporaire de données au niveau dudit noeud ou à un stockage à plus long terme permettant à des applications et à des données d'être stockées dessus, et destiné à être utilisé pour gérer une bande passante et gérer des ressources de stockage à l'intérieur d'une unique session d'un protocole de réservation de ressources étant un protocole RSVP (protocole de réservation de ressources), ledit noeud comprenant un processeur et un moyen de réception d'une demande d'attribution d'un volume de stockage défini au niveau d'un second noeud spécifié dudit réseau et une demande de fourniture d'une bande passante spécifiée à partir dudit noeud de réseau jusqu'audit second noeud spécifié où lesdites ressources de stockage doivent être réservées ;
un moyen de codage de ladite demande de fourniture de la bande passante spécifiée à titre d'information dans un message de protocole de réservation de ressources RSVP,
un moyen d'insertion de ladite demande d'attribution d'un volume de stockage défini au niveau dudit second noeud spécifié dudit réseau à titre d'objet dans ledit message de protocole de réservation de ressources RSVP,
un moyen d'envoi dudit message, pour une transmission à travers ledit réseau le long d'un trajet vers ledit second noeud spécifié et une réservation de ladite bande passante spécifiée au niveau de chaque noeud intermédiaire dudit réseau.

13. Noeud de réseau dans un réseau de transport, incluant un moyen de mémoire de données qui peut être affecté à une mise en cache temporaire de données au niveau dudit noeud ou à un stockage à plus long terme permettant à des applications et à des données d'être stockées dessus, et destiné à être utilisé pour gérer une bande passante et gérer des ressources de stockage à l'intérieur d'une unique session d'un protocole de réservation de ressources étant un protocole RSVP (protocole de réservation de ressources), ledit noeud comprenant : un processeur et un moyen de réception d'un message de protocole de réservation de ressources RSVP envoyé à partir d'un premier noeud, et une analyse de son contenu afin de demander une attribution d'une bande passante spécifiée au niveau dudit noeud de réseau et d'analyse du contenu d'un objet de demande de volume de stockage STORAGE_REQUEST dans ledit message de protocole de réservation de ressources RSVP ; un moyen de détermination du fait que la demande d'attribution de bande passante peut être satisfaite ; une unité de gestion de stockage incluant un moyen de détermination du fait que ladite demande d'attribution de stockage STORAGE_REQUEST peut être satisfaite, et d'envoi d'un identifiant d'espace de stockage réservé avec succès sous la forme d'un objet STORAGE_SPACE constituant une partie dudit protocole de réservation de protocole, si les deux desdites demandes d'attribution de bande passante spécifiée et d'attribution de stockage peuvent être satisfaites au niveau dudit noeud de réseau, en retour dudit noeud de réseau vers ledit premier noeud le long du trajet qui a été suivi par le message de protocole de réservation de ressources à travers ledit réseau à partir dudit premier noeud vers ledit noeud de réseau.

14. Noeud de réseau selon la revendication 12 dans lequel lesdits messages sont des messages de protocole RSVP et ledit objet STORAGE_REQUEST demandant une attribution d'un volume de stockage défini a le format :

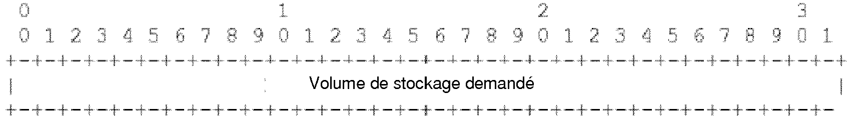

15. Noeud de réseau selon la revendication 13 dans lequel lesdits messages sont des messages de protocole RSVP et ledit objet STORAGE_REQUEST demandant une attribution d'un volume de stockage défini a le format 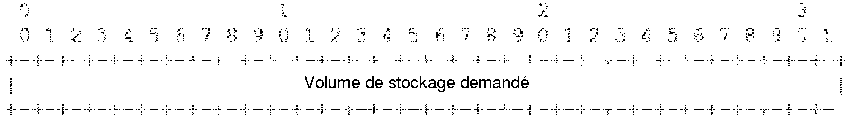 et ledit objet d'espace de stockage réservé avec succès STORAGE_SPACE a le format :

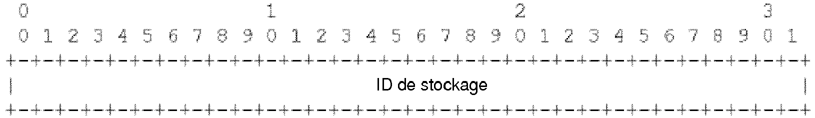

16. Noeud de réseau selon la revendication 14 ou 15 dans lequel la demande d'attribution d'un volume de stockage défini au niveau du noeud spécifié du réseau codée à titre d'objet dans ledit message de protocole de réservation de ressources RSVP inclut une spécification de la durée ou de la longévité pour laquelle une attribution est demandée.

17. Noeud de réseau selon la revendication 14 ou 15 dans lequel la demande d'attribution d'un volume de stockage défini au niveau du noeud spécifié dudit réseau codée à titre d'objet dans ledit message de protocole de réservation de ressources RSVP inclut une spécification du type de fichier pour lequel un espace de stockage est demandé.

18. Noeud de réseau selon la revendication 15 dans lequel ledit identifiant d'espace de stockage réservé avec succès STORAGE_SPACE inclut un pointeur vers le premier bloc mémoire de l'espace de stockage réservé.

19. Noeud de réseau selon la revendication 15 incluant un moyen de délivrance subséquente en retour dudit noeud de réseau vers ledit premier noeud d'informations concernant des accès à et une utilisation faite dudit espace de stockage réservé.

20. Support de stockage lisible par machine non transitoire présentant des instructions lisibles par machine qui lorsqu'exécutées par un ordinateur réalisent le procédé selon l'une des revendications 1 à 11.
